# EUROPEAN PATENT SPECIFICATION

(11) **EP 2 554 508 B1**
(45) Date of publication and mention of the grant of the patent: **27.08.2014**
(21) Application number: 12177442.6
(22) Date of filing: 23.07.2012
(51) Int. Cl.: H02G 1/02, B66F 11/04

(54) **Improvements in or relating to an access platform device**
Verbesserungen an oder im Zusammenhang mit einer Zugangsplattformvorrichtung
Améliorations apportées ou se rapportant à un dispositif de plate-forme d'accès

(30) Priority: 04.08.2011 GB 201113416
(43) Date of publication of application: 06.02.2013
(73) Proprietor: Aldercote Ltd, Hull HU9 1RJ (GB)
(72) Inventor: Dillon, Paul, Hull, HU9 1RJ (GB)
(74) Representative: Bates, Daniel Joseph

(56) References cited:
- EP-A1- 1 513 237
- CN-Y- 2 697 066
- GB-A- 1 170 461
- GB-A- 2 138 390
- US-A- 4 534 444
- US-A- 6 131 700

## Description

### Technical Field

The invention relates to an access platform device, and a vehicle including an access platform device.

### Background

It is known to provide a vehicle having a mechanical arm mounted to it with an access platform attached to the mechanical arm. Such an access platform may be used for accessing overhead cables or for gaining access to other items above the ground such as guttering or trees. Typically the access platform is a bucket in which a person can stand so that they can work safely at height. The bucket is attached to an end of the mechanical arm which typically has a plurality of rigid sections which are pivotably connected to each other. The rigid sections are movable with hydraulic actuators so that the bucket can be located at the desired height.

A problem with such access platforms may be encountered with live overhead electric cables. If the mechanical arm, the bucket or a person within the bucket should touch the electric cable, a electrically conducting path may be created between the electric cable and the ground, which may be dangerous.

It is known to use a bucket made of a plastics material which provides electrical insulation for the person in the bucket. Whilst such an arrangement provides protection to the person in the bucket, a person on the ground who may be near to or touching the vehicle may not be sufficiently protected. For example, if the mechanical arm itself touches the live electric cable, the electricity may flow through the mechanical arm and the vehicle, and may also flow through the person who is near to or touching the vehicle.

In an attempt to solve this problem it is known to provide electrical insulation between the joints of the plurality of rigid sections of the mechanical arm. This is achieved by electrically insulating the pivot pins which are used to connect adjacent rigid sections together using plastic bushes. The plastic bushes are located between the pivot pins and the rigid sections. A problem associated with such an arrangement is that the plastic bushes may deteriorate over time due to wear, which is caused by the movement of the joint and the load that is carried by the mechanical arm. It is common for the plastic bushes to crack and require periodic replacement. If the requirement for periodic replacement is overlooked there may be insufficient electrical insulation between the rigid sections of the mechanical arm.

In a further attempt to solve the problem it is also known to manufacture the rigid section of the mechanical arm which is adjacent to the bucket from a plastics material. With such an arrangement a conducting path is not created should the plastic section touch a live electric cable. Whereas this arrangement may provide a degree of improved safety, if the lower sections of the mechanical arm should touch the live electric cable the problem still remains, and a conduction path may be created between the lower sections of the mechanical arm and the ground.

It is known from GB1170461A (Telsta Corp) to provide lifting equipment comprising a platform and a support structure. The support structure is rotatable about a vertical axis and has a ceramic insulator at a lower region thereof which is between a mounting plate and a flanged hub.

It is known from US4534444 (Smith Van Z) to provide a telescopic boom structure having an end portion of a lower boom structure made of electrically insulating material.

EP1513237A1 (Electricite De France) discloses an electrical insulating device for a handling machine having an arm. The arm has an upper section with the electrical insulating device, which forms a part of a top end arm.

It is known from US6131700 (Farner Thomas) to provide a scaffolding platform made from a fibre reinforced composite material.

It is known from GB2138390 (ACS Engineering Ltd) to provide a luffing arm carried on two concentric cylinders which are electrically insulated from each other.

It is broadly an object of the present invention to address one or more of the above mentioned disadvantages of previously known ways of proving electrical insulation to an access platform device.

### Summary

What is required is an access platform device, and a vehicle including an access platform device which may reduce or minimise at least some of the above-mentioned problems.

According to a first aspect of the invention, there is provided an access platform device according to claim 1.

Such an access platform device provides the advantage that the complete mechanical arm and the access platform are provided with electrical insulation. It will be appreciated that typically the support may be located on a vehicle and/or may be in contact with the ground. Accordingly, with such an arrangement an electrically conducting path is not created between the support and the mechanical arm or access platform if a live electrical cable is accidentally touched by the access platform or the mechanical arm. Consequently if a person on the ground is near to or touching the support or the vehicle they are provided with protection. This advantage is achieved by the spigot which has a cross section comprised of the electrically insulating material. Such an arrangement overcomes the problems associated with providing electrical insulation to the pivot pins between the sections of the mechanical arm as per the prior art. Furthermore, such an arrangement overcomes the problems associated with only manufacturing the rigid section adjacent to the access platform from a plastics material.

The mechanical arm is spaced apart from the support with the spigot. Such an arrangement may further assist with avoiding a conduction path being created between the mechanical arm and the support.

Preferably said portion has a length of between 2 - 60cm. In one embodiment the portion has a length of substantially 18cm. Such dimensions may provide the advantage of an improved configuration for the spigot.

Preferably the portion is comprised of a plastics material. Preferably the portion is comprised of a fibre reinforced material. Such arrangements may provide the advantage of an appropriate electrical insulation and structural performance.

Preferably the fibre reinforced material comprises a glass fibre reinforced material. Such a material may further assist with providing the required electrical insulation and structural performance.

In one embodiment the spigot is substantially wholly comprised of an electrically insulating material. Such an arrangement may be a convenient way to manufacture the spigot.

In one embodiment the spigot is tubular. Providing a tubular spigot may be useful for containing hydraulic hoses which are required to operate actuators for the mechanical arm.

Preferably the spigot with the upper collar for attachment to the mechanical arm is such that the spigot is adhesively bonded to the upper collar. Preferably the spigot with the lower collar for attachment to the support is such that the spigot is adhesively bonded to the lower collar. Using an adhesive is advantageous because it provides an improved strength for the attachment between the spigot and the support or the mechanical arm.

According to a second aspect of the invention there is provided a vehicle comprising an access platform device according to the first aspect of the invention.

Such an arrangement provides the advantage that the vehicle is provided with electrical insulation when the support is secured to the vehicle. Accordingly, with such an arrangement an electrically conducting path is not created between the vehicle and the mechanical arm or access platform if a live electrical cable is accidentally touched by the access platform or the mechanical arm. Consequently if a person on the ground is near to or touching the support or the vehicle they are provided with protection. This advantage is achieved by the spigot which has a cross section comprised of the electrically insulating material. Such an arrangement overcomes the problems associated with providing electrical insulation to the pivot pins between the sections of the mechanical arm as per the prior art. Furthermore, such an arrangement overcomes the problems associated with only manufacturing the rigid section adjacent to the access platform from a plastics material.

Preferably a roof of the vehicle has an aperture and the spigot passes through the aperture. Such an arrangement may be useful to further shield the mechanical arm from being touched by a person on the ground.

Preferably said portion coincides with the aperture. Preferably a continuous gap or an electrically insulating seal is provided between an edge of the aperture and the spigot. Such arrangements may provide the advantage of an improved electrical insulation between the mechanical arm and the vehicle.

Preferably the gap is between 1 - 11cm. In one embodiment the gap is substantially 6cm. Such dimensions may provide the advantage of an improved configuration and allow cleaning of the spigot if required.

Preferably the spigot has a collar which is continuously around the spigot and which has a downwardly extending rim. Preferably the aperture has an upwardly extending rim which is continuous around the aperture, and which cooperates with the downwardly extending rim such that it is inside thereof. Such arrangements provide a weather shield which is useful to protect the spigot from rain and dirt.

According to an alternative way of characterising the invention there is provided a mechanical arm for carrying an access platform at a free end thereof, the mechanical arm having a hinged connection to a rotatable spigot which is rotatably mounted to a support about a substantially vertical axis, wherein at least a portion of the rotatable spigot along the axis thereof has a cross section which is comprised of an electrically insulating material.

Any preferred or optional features of one aspect or characterisation of the invention may be preferred or optional feature of other aspects of the invention.

### Brief Description of the Drawings

Other features of the invention will be apparent from the following description of preferred embodiments shown by way of example only with reference to the accompanying drawings, in which;
**Figure 1** shows a schematic side view of an access platform device and a vehicle according to an embodiment of the invention;
**Figure 2** shows a cross section of a detail shown in Figure 1;
**Figure 3** is a perspective view of the access platform device shown in Figure 1;
**Figure 4** is a perspective view of a spigot and a mounting member shown in Figure 1 and 3; and
**Figure 5** is a cross section of the spigot and the mounting member shown in Figure 4 along line A-A.

### Detailed Description

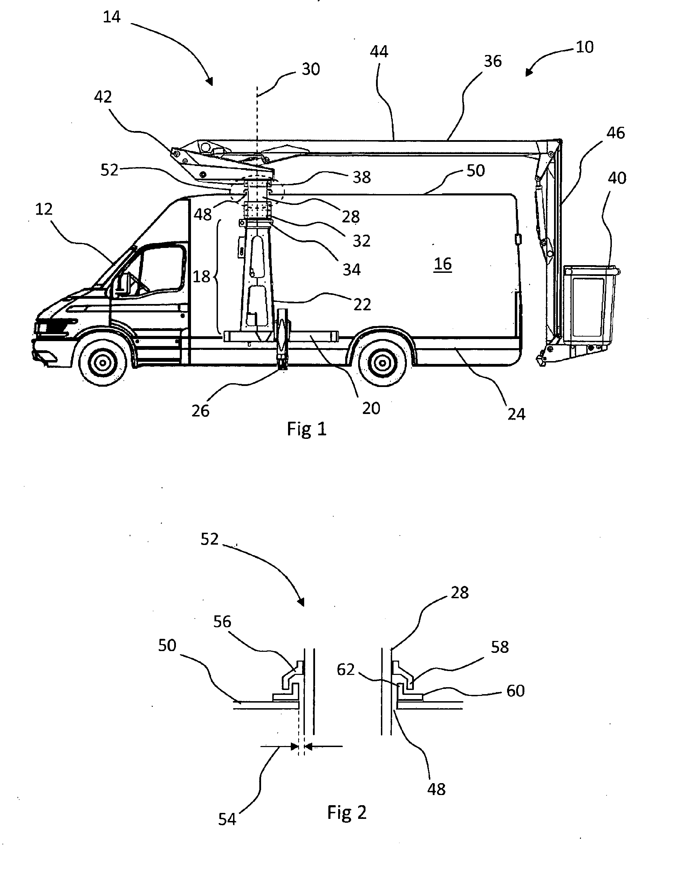

Figure 1 shows a schematic side view of an access platform device 10 and a vehicle 12 according to an embodiment of the invention, generally designated 14. The vehicle 12 is a van having a rear load volume 16 which is accessible via doors (not shown). It will be appreciated that the schematic side view shown in Figure 1 shows an inside of the rear load volume 16 and a view of an outside of the vehicle 12 such as the cab area and access platform device 10.

In Figure 1 the access platform device 10 is shown to comprise a support 18 comprising a base 20 with a pillar 22 thereon. The base 20 is secured to a chassis 24 of the vehicle 12. The base 20 also has stabilising legs 26 which protrude through a floor of the vehicle 12 to make contact with the ground when the access platform device 10 is in use. The support 18 has a spigot 28 rotatably mounted on top of it, which is rotatable about a substantially vertical axis 30. The spigot 28 has a lower collar 32 which is mounted to a drive arrangement 34. The drive arrangement 34 is mounted to the support 18. The drive arrangement 34 is operable to rotate the lower collar 32 about the axis 30. The access platform device 10 also has a mechanical arm 36, also known as a boom structure or an articulated mechanical arm, attached on top of the spigot 28. The spigot 28 has an upper collar 38 and the mechanical arm 36 is attached to it.

The mechanical arm 36 has an access platform 40 pivotably attached to a free end thereof. The mechanical arm 36 comprises a mounting member 42, a first section 44 and a second section 46 which are hingedly connected to one another. Whereas a hinged mechanical arm 36 is shown it will be appreciated that any type of mechanical arm 36 may be used, such as a telescopic mechanical arm. The mounting member 42 is attached to the upper collar 38 of the spigot 28. In operation the spigot 28 is rotatable about the axis 30 so that the mechanical arm 36 is rotatable about the axis 30. The first section 44 is pivotable relative to the mounting member 42, and the second section 46 is pivotable relative to the first section 44. The access platform 40 is pivotable relative to the second section 46. In this manner the access platform device 10 is operational to lift the access platform 40 to a suitable working height. It will be appreciated that movement of the mechanical arm 36 is provided by hydraulic actuators which will not be described further and the skilled person will know the requirements for such arrangements. According to an embodiment of the invention the spigot 28 is shown to pass through an aperture 48 in a roof 50 of the vehicle 12. With such an arrangement the support 18 and a lower part of the spigot 28 are located within the rear load volume 16 of the vehicle 12, and an upper part of the spigot 28 and the mechanical arm 36 are located outside of the vehicle 12. Whereas the access platform device 10 is shown to be mounted to the van 12 having a roof 50 and a rear load volume 16, it will be understood that the access platform device 10 may alternatively be mounted to a vehicle having a rear flat bed which does not have a roof. In another arrangement the access platform device 10 may be mounted to a trailer.

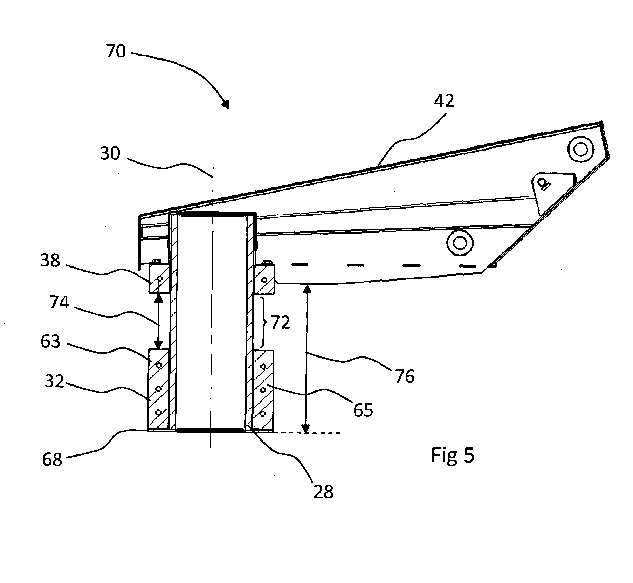

The spigot 28 is made from an electrically insulating material. Such an arrangement provides the advantage that the complete mechanical arm 36 and the access platform 40 are provided with electrical insulation from the vehicle 12 and support 18. If a person on the ground is near to or touching the support 18 or the vehicle 12 they are provided with protection in the event that the mechanical arm 36 or access platform 40 should touch a live electricity cable. Whereas the spigot 28 is described as being made wholly from an electrically insulating material it will be appreciated that the desired effect can be achieved when a portion (shown at 72 in Figure 5) of the spigot 28 along the axis thereof 30 has a cross section which is comprised of an electrically insulating material to isolate the mechanical arm 36 from the support 18. In a preferred arrangement the portion is adjacent to the aperture 48, which further reduces the possibility that an electrically conducting path is created between the spigot 28 and the roof 50.

Figure 2 shows a cross section of a detail 52 shown in Figure 1. In Figure 2 like features to the arrangements of Figure 1 are shown with like references. In Figure 2 the spigot 28 is shown to be tubular, and a gap 54 is shown between the spigot 28 and an edge of the aperture 48 so that the spigot 28 does not touch the roof 50. The gap 54 is continuous around the spigot 28 and provides a further failsafe way of avoiding a conduction path being created between the access platform 40 or mechanical arm 36 and the support 18 or the roof 50. The gap 54 is about 6cm, but it will be appreciated that the gap 54 may be any suitable dimension to achieve the desired effect of providing electrical insulation between the spigot 28 and the roof 50, and may be for example between 1 - 11 cm.

The spigot 28 has a collar 56 attached to it which is continuously around the spigot 28 and which has a downwardly extending rim 58 which is spaced apart from the spigot. The collar 56 provides a weather shield for the spigot 28 and protects it from rain and dirt. This is advantageous because water and dirt may provide a conducting path for electricity should the mechanical arm 36 or the access platform 40 touch a live electricity cable. Accordingly, the provision of the collar 56 may further avoid the spigot 28 conducting electricity due to dirt and water. The aperture 48 has a collar 60 around it which is continuous around the aperture 48, and which has an upwardly extending rim 62. The upwardly extending rim 62 is inside of the downwardly extending rim 58. The upwardly extending rim 62 and the downwardly extending rim 58 cooperate with each other to provide an improved weather shield for the spigot 28 to avoid or reduce contamination of the spigot 28 with dirt and water. A continuous gap is provided between the upwardly extending rim 62 and the downwardly extending rim 58 so that the two parts do not touch each other. This may further assist with avoiding a conduction path being created between the mechanical arm 36 and the support 18 or the roof 50. The collars 56, 60 are made of an electrically insulating material, such as a plastics material, which may further assist with providing the required electrical insulation between the spigot 28 and the roof 50.

In one embodiment the gap 54 is wide enough to allow a person to clean the spigot 28 with a cloth if required. Such an arrangement may be useful to allow removal of dirt to avoid a conduction path being created between the mechanical arm 36 and the support 18 or the roof 50. In one embodiment the support 18 is between 1.0 - 2.2m in height above the base 20. This allows a person to reach up to the spigot 28 and clean it if required, but it is not too low that the person can accidentally touch the spigot 28. Such a configuration provides the advantage of allowing ready access for cleaning and maintenance of the spigot 28 whilst also providing a failsafe operation of the access platform device 10 during use.

Whereas Figure 2 shows a gap 54 between an edge of the aperture 48 and the spigot 28, alternatively there may be substantially no gap and an electrically insulating seal may be located between the edge of the aperture 48 and the spigot 28. Such an electrically insulating seal would provide similar electrical insulation to the gap 54, and may also provide the added advantage of a watertight seal or a draft seal to inhibit the passage of water and/or air. The electrically insulating seal may be of any suitable material such as rubber.

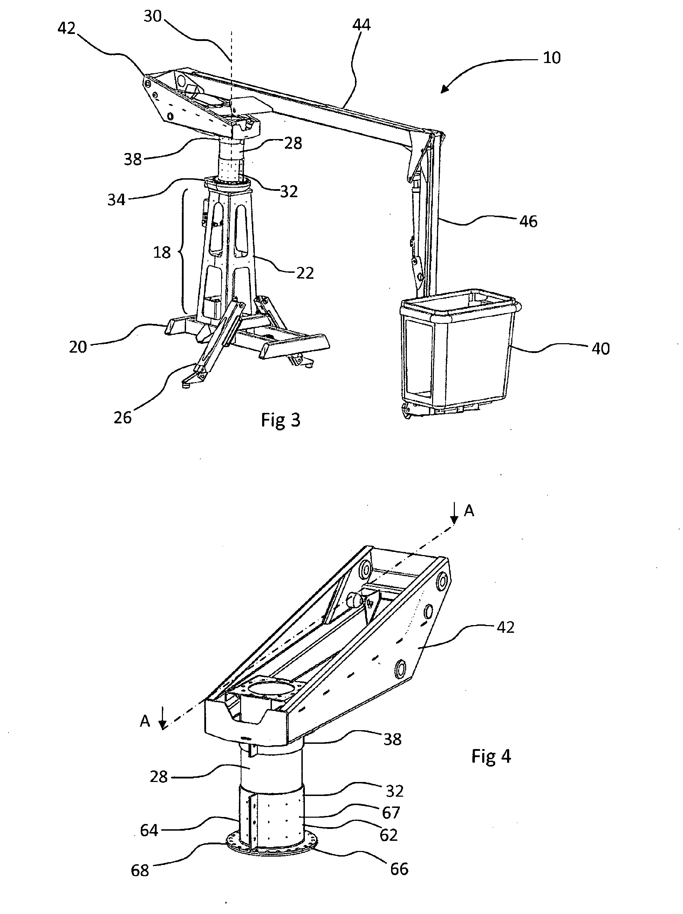

Figure 3 is a perspective view of the access platform device 10 shown in Figure 1. In Figure 3 like features to the arrangements of Figure 1 are shown with like references. In Figure 3 the arrangement of the spigot 28 between the support 18 and the mounting member 42 are shown. The arrangement of the stabilising legs 26 on either side of the base 22 is also shown for stabilising the access platform device 10 when in use.

Figure 4 is a perspective view of the spigot 28 and the mounting member 42 shown in Figures 1 and 3. In Figure 4 like features to the arrangements of Figures 1 and 3 are shown with like references. In Figure 4 the lower collar 32 is shown to comprise two half shells 62, 64 having side flanges 63, 65 (shown most clearly in Figure 5). The half shells 62, 64 are fastened together around a lower end of the spigot 28 using fasteners through the side flanges 63, 65. An adhesive may also be used to bond the half shells 62, 64 to the spigot 28 which may also flow through a plurality of holes 67 in the half shells 62, 64. The plurality of holes 67 may provide a key for the adhesive to provide an improved joint between the lower collar 32 and the spigot 28. The adhesive should be a structural adhesive suitable to bond the lower collar 32, which is of steel, to the spigot 28, which is of an electrically insulating material. The skilled person will know the requirements for such an adhesive. A similar arrangement is provided for the upper collar 38 to fasten and adhesively bond it to an upper part of the spigot 28. Using an adhesive is advantageous because it provides an improved strength for the attachment between the spigot 28 and the support 18 or the mechanical arm 10.

Each half shell 62, 64 of the lower collar 32 also has a flange 66, 68 at a lower edge thereof for attachment of the lower collar 32 to the drive arrangement 34 using fasteners. A similar arrangement for the upper collar 38 is used for attaching an upper part of the spigot 28 to the mounting member 42. The upper collar 38 is attached to approximately an upper third of the spigot 28, the lower collar 32 is attached to approximately a lower third of the spigot 28. A middle part of the spigot 28 remains visible between the lower collar 32 and the upper collar 38. It will be appreciated that the lower collar 32 and the upper collar 38 are attached to the spigot 28 so that there is no movement between the parts. Similarly, the upper collar 38 is attached to the mounting member 42 so that there is no movement between them. The lower collar 32 is attached to the drive arrangement 34 so that it is fixed thereto and can be rotated by the drive arrangement 34.

Figure 5 is a cross section of the spigot 28 and the mounting member 42 shown in Figure 4 along line A-A, generally designated 70. In Figure 5 like features to the arrangements of Figure 4 are shown with like references. In Figure 5 the lower collar 32 and the upper collar 38 are shown to be separated by a portion 72 of the spigot 28 having a dimension 74. The dimension 74 may be between 2 - 60cm, but in a preferred arrangement the dimension 74 is between 2.5 - 30cm, and more preferably substantially 18cm. Also shown is the flange 68 of the lower collar 32, which is attached to the drive arrangement 34. The mounting member 42 and the flange 68 are spaced apart by a dimension 76. The dimension 76 may be between 20 - 200cm, but in a preferred arrangement the dimension 76 is 47.5cm.

Figures 4 and 5 also show that the spigot 28 is tubular having a circular cross section. It will be appreciated that any suitable tubular section may be used. A tubular section is useful for containing hydraulic hoses (not shown) which are required to operate the actuators for the mechanical arm. However, a circular cross section may be considered to provide an optimised structure for transferring a torsion load between the mechanical arm 36 and the support 18. For example, when the mechanical arm 36 is rotating about the axis 30 and is then stopped abruptly the maximum torsion load may be encountered. Providing a circular cross section permits the structure of the spigot 28 to be optimised so that it can transfer the torsion loads in an effective manner.

In the above embodiments the spigot 28 is described as being made of an electrically insulating material. Such a material should withstand the structural requirements for operation of the mechanical arm 36 and the requirement for allowing the portion 72 of the spigot 28 to resist a voltage of a greater than 3kV, which may be achieved using a glass fibre reinforced spigot 28 where the portion 72 has a dimension 74 of 2.5cm. In a preferred arrangement the portion 72 can withstand a voltage of greater than 15kV. In one embodiment the spigot is manufactured from a glass fibre reinforced material, which is comprised of glass fibre and a thermosetting plastic matrix or resin. Glass fibre and a plastic resin are considered to be electrically insulating materials within the context of the embodiments herein. An electrical insulator may also be called a dielectric material, and a suitable dielectric material for the purposes of the embodiments herein may have a dielectric strength of about 3.3kV per cm based on the portion 72 of the spigot 28 having a dimension of 6cm and being able to withstand a voltage of about 20kV. In another embodiment the dielectric material may have a dielectric strength of about 1.2kV per cm based on the portion 72 of the spigot 28 having a dimension of 2.5cm and being able to withstand a voltage of about 3kV. It will be appreciated that there may be other materials which may be suitable for the spigot 18 to provide the required electrical insulation and mechanical strength.

It will be understood that an electric current may arc across a gap even when a dielectric material may be present. The amount and type of dielectric material required to provide sufficient electrical insulation will vary depending on a particular application and in particular the voltage, the frequency of the electric current, and the weather conditions which may change the amount of moisture in the air. Other variables may also influence the type and amount of dielectric material required. Based on the principles described herein the skilled person will be able to determine the amount and type of dielectric material, and the preferred dimension 74 for the portion 72 for the particular application.

Whereas the majority of the components in the access platform device 10 are of steel, the spigot 28 is substantially the only component which is of a plastics material. For example, the lower collar 32, the upper collar 38, and the mechanical arm 36 are of steel. Such an arrangement does not preclude other components of the access platform device 10 not being of steel, for example, the access platform 40 may be of a plastics material, and one or more of the sections 44, 46 of the mechanical arm 36 may also be of a plastics material.

## Claims

1. An access platform device (10), comprising a support (18) having a drive arrangement (34), the support (18) having a spigot (28) rotatably mounted thereto which is rotatable about a substantially vertical axis (30) by the drive arrangement (34), and a mechanical arm (36) attached to the spigot (28), the mechanical arm (36) having an access platform (40) attached to a free end thereof, **characterised in that**:
at least a portion (72) of the spigot (28) along the axis thereof has a cross section which is comprised of an electrically insulating material, the spigot (28) having an upper collar (38) for attachment to the mechanical arm (36), the spigot (28) having a lower collar (32) for attachment to the support (18), the lower collar (32) and the upper collar (38) being separated by the portion (72), wherein operation of the drive arrangement (34) is operable to transfer a torsion load through the portion to the mechanical arm (36).

2. An access platform device according to claim 1, wherein said portion (72) has a length of between 2 - 60cm, and preferably the portion (72) has a length of substantially 18cm.

3. An access platform device according to any preceding claim, wherein the portion (72) is comprised of a plastics material.

4. An access platform device according to any preceding claim, wherein the portion (72) is comprised of a fibre reinforced material, and preferably the fibre reinforced material comprises a glass fibre reinforced material.

5. An access platform device according to any preceding claim, wherein the spigot (28) is substantially wholly comprised of an electrically insulating material.

6. An access platform device according to any preceding claim, wherein the spigot (28) is tubular.

7. A vehicle (12) comprising an access platform device (10) according to any preceding claim.

8. A vehicle according to claim 7, wherein a roof (50) of the vehicle has an aperture (48) and the spigot (28) passes through the aperture (48), and preferably said portion coincides with the aperture (48).

9. A vehicle according to claim 8, wherein a continuous gap (54) or an electrically insulating seal is provided between an edge of the aperture (48) and the spigot (28).

10. A vehicle according to claim 9, wherein the gap (54) is between 1 - 11cm, and preferably the gap (54) is substantially 6cm.

11. A vehicle according to any of claims 8 - 10, wherein the spigot (28) has a collar (56) which is continuously around the spigot (28) and which has a downwardly extending rim (58).

12. A vehicle according to claim 11, wherein the aperture (48) has an upwardly extending rim (62) which is continuous around the aperture (48), and which cooperates with the downwardly extending rim (58) such that it is inside thereof.

## Patentansprüche

1. Arbeitsbühne (10), die Folgendes umfasst: einen Träger (18), der eine Antriebsanordnung (34) aufweist, wobei der Träger (18) einen Zapfen (28) aufweist, der drehbar daran angebracht ist und der um eine im Wesentlichen vertikale Achse (30) von der Antriebsanordnung (34) gedreht werden kann, sowie einen mechanischen Arm (36), der auf dem Zapfen (28) angebracht ist, wobei der mechanische Arm (36) eine Arbeitsbühne (40) aufweist, die an einem freien Ende davon befestigt ist, **dadurch gekennzeichnet, dass**:
mindestens ein Teil (72) des Zapfens (28) entlang der Achse davon einen Querschnitt aufweist, der aus einem elektrisch isolierenden Material besteht, wobei der Zapfen (28) einen oberen Bund (38) zur Befestigung an dem mechanischen Arm (36) aufweist, wobei der Zapfen (28) einen unteren Bund (32) zur Befestigung an dem Träger (18) aufweist, wobei der untere Bund (32) und der obere Bund (38) durch den Abschnitt (72) getrennt sind, wobei durch Betrieb der Antriebsanordnung (34) eine Torsionsbelastung durch den Abschnitt auf den mechanischen Arm (36) übertragen werden kann.

2. Arbeitsbühne nach Anspruch 1, wobei der Abschnitt (72) eine Länge von 2 - 60 cm und vorzugsweise der Abschnitt (72) eine Länge von im Wesentlichen 18 cm aufweist.

3. Arbeitsbühne nach einem der vorhergehenden Ansprüche, wobei der Abschnitt (72) aus einem Kunststoffmaterial besteht.

4. Arbeitsbühne nach einem der vorhergehenden Ansprüche, wobei der Abschnitt (72) aus einem faserverstärkten Material besteht und wobei das faserverstärkte Material vorzugsweise ein glasfaserverstärktes Material umfasst.

5. Arbeitsbühne nach einem der vorhergehenden Ansprüche, wobei der Zapfen (28) im Wesentlichen vollständig aus einem elektrisch isolierenden Material besteht.

6. Arbeitsbühne nach einem der vorhergehenden Ansprüche, wobei der Zapfen (28) rohrförmig ist.

7. Fahrzeug (12), das eine Arbeitsbühne (10) nach einem der vorhergehenden Ansprüche umfasst.

8. Fahrzeug nach Anspruch 7, wobei ein Dach (50) des Fahrzeugs eine Öffnung (48) aufweist und der Zapfen (28) durch die Öffnung verläuft (48) und wobei der Abschnitt vorzugsweise mit der Öffnung (48) zusammenfällt.

9. Fahrzeug nach Anspruch 8, wobei ein durchgehender Spalt (54) oder eine elektrisch isolierende Dichtung zwischen einer Kante der Öffnung (48) und dem Zapfen (28) vorgesehen ist.

10. Fahrzeug nach Anspruch 9, wobei der Spalt (54) 1 - 11 cm und der Spalt (54) im Wesentlichen vorzugsweise 6 cm aufweist.

11. Fahrzeug nach einem der Ansprüche 8 - 10, wobei der Zapfen (28) einen Bund (56) aufweist, der kontinuierlich um den Zapfen (28) verläuft und einen sich nach unten erstreckenden Rand (58) aufweist.

12. Fahrzeug nach Anspruch 11, wobei die Öffnung (48) einen sich nach oben erstreckenden Rand (62) aufweist, der kontinuierlich um die Öffnung (48) verläuft und mit dem sich nach unten erstreckenden Rand (58) derart zusammenwirkt, dass er sich in seinem Inneren befindet.

## Revendications

1. Dispositif de plate-forme d'accès (10), comprenant un support (18) ayant un agencement d'entraînement (34), sur le support (18) étant monté avec faculté de rotation un ergot (28) pouvant être tourné autour d'un axe sensiblement vertical (30) par l'agencement d'entraînement (34), et un bras mécanique (36) attaché à l'ergot (28), le bras mécanique (36) ayant une plate-forme d'accès (40) attachée à une extrémité libre de celui-ci, **caractérisé en ce que** :
au moins une partie (72) de l'ergot (28) dans l'axe de celui-ci a une section transversale qui est composée d'un matériau électriquement isolant, l'ergot (28) ayant un collier supérieur (38) destiné à être fixé au bras mécanique (36), l'ergot (28) ayant un collier inférieur (32) destiné à être fixé au support (18), le collier inférieur (32) et le collier supérieur (38) étant séparés par la partie (72), dans lequel l'agencement d'entraînement (34) est actionnable pour transférer une charge de torsion au bras mécanique (36) par le biais de la partie.

2. Dispositif de plate-forme d'accès selon la revendication 1, dans lequel ladite partie (72) a une longueur entre 2 et 60cm, et de préférence la partie (72) a une longueur de sensiblement 18c.

3. Dispositif de plate-forme d'accès selon l'une quelconque des revendications précédentes, dans lequel la partie (72) est composée d'un matériau plastique.

4. Dispositif de plate-forme d'accès selon l'une quelconque des revendications précédentes, dans lequel la partie (72) est composée d'un matériau renforcé par des fibres et de préférence le matériau renforcé par des fibres comprend un matériau renforcé par des fibres de verre.

5. Dispositif de plate-forme d'accès selon l'une quelconque des revendications précédentes, dans lequel l'ergot (28) est sensiblement entièrement composé d'un matériau électriquement isolant.

6. Dispositif de plate-forme d'accès selon l'une quelconque des revendications précédentes, dans lequel l'ergot (28) est tubulaire.

7. Véhicule (12) comprenant un dispositif de plate-forme d'accès (10) selon l'une quelconque des revendications précédentes.

8. Véhicule selon la revendication 7, dans lequel un toit (50) du véhicule comporte une ouverture (48) et l'ergot (28) passe par l'ouverture (48), et de préférence ladite partie coïncide avec l'ouverture (48).

9. Véhicule selon la revendication 8, dans lequel un espace continu (54) ou un joint électriquement isolant est fourni entre un bord de l'ouverture (48) et l'ergot (28).

10. Véhicule selon la revendication 9, dans lequel l'espace (54) mesure entre 1 et 11cm, et de préférence l'espace (54) mesure sensiblement 6cm.

11. Véhicule selon l'une quelconque des revendications 8 à 10, dans lequel l'ergot (28) comporte un collier (56) qui entoure continûment l'ergot (28) et qui présente un bord s'étendant vers le bas (58).

12. Véhicule selon la revendication 11, dans lequel l'ouverture (48) présente un bord s'étendant vers le haut (62) qui est continu autour de l'ouverture (48), et qui coopère avec le bord s'étendant vers le bas (58) de façon à se trouver à l'intérieur de celui-ci.
